# EUROPEAN PATENT APPLICATION

(11) **EP 3 757 194 A1**
(43) Date of publication of application: **30.12.2020**
(21) Application number: 19182111.5
(22) Date of filing: 24.06.2019
(51) Int. Cl.: C10G 9/36, C10G 25/05, C10G 25/00, B01D 53/04, C10G 55/04

(54) **PROCESS FOR REMOVING CS2 FROM HYDROCARBON STREAMS**

(71) Applicant: BASF Corporation, Florham Park, NJ 07932 (US)
(72) Inventor: BOERMAN, Ernst, 3454 PK De Meern (NL); BRANDTS, Jim, 3454 PK De Meern (NL)
(74) Representative: Féaux de Lacroix, Stefan

(57) **Abstract**

A process for producing a hydrocarbon stream with reduced CS₂ content, comprising contacting a hydrocarbon stream containing CS₂ with a solid reactive CS₂-scavenger which contains primary and/or secondary amino group-bearing hydrocarbon residues attached to a solid support, at a temperature in the range of from 0 to 300°C, and separating the obtained reaction product of CS₂ and reactive CS₂-scavenger from the hydrocarbon stream.

## Description

The invention relates to the use of a solid CS₂-scavenger for removing carbon disulfide (CS₂) from hydrocarbon streams, to a process for producing a hydrocarbon stream with reduced CS₂ content, specifically to the use of a specific solid reactive CS₂-scavenger and its preparation.

The feedstock for steamcrackers (naphtha and condensate) contains considerable amounts of contaminants like sulphur and nitrogen components and metal species. Over the last years, especially the presence of CS₂ has become a problem. It was found that CS₂ from the contaminated naphtha will pass the furnaces of the cracker unchanged and tend to accumulate in the C5+ fraction (pyrolysis gasoline or pygas) after fractionation. In downstream selective hydrogenation of pyrolysis gasoline using Pd or Ni catalysts, the CS₂ leads to rapid deactivation of the catalyst bed which results in frequent regeneration becoming necessary, and in a shorter lifetime. Also when isoprene is extracted from pygas, CS₂ is found in the end-product making it less valuable.

Several processes are known, wherein CS₂-contaminated hydrocarbon streams are contacted with a solution of amines or polyamines in water. The CS₂ will react with the amine to form a dithiocarbamate which is extracted into the water phase and separated from the hydrocarbon stream via phase separation.

US 2,418,047 discloses a process for the removal of carbon disulfide from a hydrocarbon liquid by reacting said liquid with dimethylamine in aqueous solution in order to form aminodithiocarbamate.

EP 0 053 571 A1 discloses the purification of hydrocarbons by treatment with polyamines. For example, tetraethylenepentamine (TEPA) is contacted with a solution of isoprene and pentane containing CS₂.

WO 2015/026649 A1 discloses the use of polyamines as a CS₂ scavenger in isoprene production. Preferred polyamines are tetraethylenepentamine (TEPA), or diethylenetriamine (DETA). In addition, a quaternary ammonium salt is employed as phase transfer catalyst.

The known processes may be efficient in the removal of CS₂, but the use of a fixed bed process or solid adsorbent/absorbent is much more convenient and in most cases preferred over an extraction process.

Removal and Recovery of Carbon Disulfide Emitted by the Viscose Process: Final Report, by M. J. Mcintosh, Energy Systems Division, Argonne National Laboratory, February 1992, discloses results for the tests employing different substrates which were reacted with aminosilanes to produce an adsorbent containing amino groups in order to remove the CS₂ from water-saturated air. Silica gel or activated alumina was treated with A1120 which appears to be N(beta-aminoethyl)gamma-aminopropyltrimethoxy silane from Silquest.

It was found that these treated adsorbents have no practical value for CS₂ recovery from water-saturated air containing approximately 100 ppm of CS₂ coming from the viscose process to manufacture rayon or cellulose products. It was found that the amine silane treatment resulted in no significant advantage for CS₂ removal when compared to water-washed mordenite which has the most ability to hold CS₂. It was, however, found that the amino treatment seemed to improve the ability of active alumina to hold up CS₂, but no such difference was noted for silica gel, see sections 4.3.1 and 4.3.2 on pages 64/65 thereof.

There are only few fixed bed processes known in the market which claim that they can remove CS₂ from naphtha. In US 2017/0073589, CS₂ is removed from a hydrocarbon stream by using a clinoptilolite adsorbent or a barium exchanged zeolite adsorbent.

WO 2018/029661 A1 relates to a process for reducing the amount of carbon disulfide (CS₂) in a hydrocarbon feed containing C₅-C₈ fractions. The hydrocarbon feed is treated with an amine functionalized anion exchange resin (basic anion exchange resin) to obtain a mixture comprising a liquid fraction containing treated hydrocarbon and a solid mass containing an adduct of CS₂ and the amine functionalized anion exchange resin. The so obtained liquid fraction containing the treated hydrocarbon is separated from the solid mass to obtain the hydrocarbon having CS₂ content less than 2 ppm. The amine functionalized anion exchange resin can be regenerated from the solid mass. The continuous process runs at temperatures < 40°C, pressures < 5 bar and a typical treating time of 1 to 10 hours.

In case of a fixed bed, treating time is equivalent to contact time. WO 2018/029661 describes a process with a treating time of 1 to 10 hours which corresponds to a linear hourly space velocity (LHSV) from 0.1 to 1 h-1. The relatively low space velocity is limited by the typical particle sizes of available resins (0.3 to 1.2 mm).

In processes where large volumes of hydrocarbons are processed, typical LHSV values are in the range of 5 to 10 hr-1 (in some cases even higher) to keep the reactor or adsorbent bed size as small as possible. At these high space velocities, the particle size and shape of the adsorbent is crucial and should be optimized.

The object underlying the present invention is to provide a solid, preferably fixed bed adsorbent and process for the selective removal of CS₂ with high capacity from liquid hydrocarbon streams.

The object is achieved according to the present invention by a process for producing a hydrocarbon stream with reduced CS₂ content, comprising contacting a hydrocarbon stream containing CS₂ with a solid reactive CS₂-scavenger which contains primary and/or secondary amino group-bearing hydrocarbon residues attached to a solid inorganic support, at a temperature in the range of from 0 to 300°C, preferably 5 to 200°C, more preferably 10 to 100°C, and separating the obtained reaction product of CS₂ and reactive CS₂-scavenger from the hydrocarbon stream.

The object is furthermore achieved by the use of the above solid CS₂-scavenger for removing CS₂ from hydrocarbon streams and by a solid reactive CS₂-scavenger which contains primary and/or secondary amino group-bearing hydrocarbon residues attached to a solid inorganic support which is capable of removing CS₂ from hydrocarbon streams and which is described in further detail below.

Thus, the present invention also discloses a solid reactive CS₂-scavenger, comprising one primary amino group at the end of and at least two secondary amino groups inserted in a linear C₃₋₁₂-alkylene residue which is attached to a solid support, and a process for preparing it by coupling the linear C₃₋₁₂-alkylene residue with the solid support via an alkoxysilyl group, preferably trialkoxysilyl group, preferably by reacting N¹-(3-trimethoxysilylpropyl)diethylene triamine with silica gel.

The invention finally discloses the use of this solid reactive CS₂-scavenger for removing CS₂ from fluids containing CS₂, preferably from hydrocarbon fluids or streams.

According to the present invention, it was found that CS₂ can be selectively removed from steamcracker naphtha without the concomitant removal of other contaminants typically found in naphtha. The process can be performed on a naphtha containing stream, preferably steam cracker feed stream, or a stream coming from a steam cracker or subsequent extraction and/or distillation unit in which the stream is separated in fractions.

Particle size and shape of the adsorbent can be optimized by choosing the most suitable solid inorganic support and modifying this support with suitable amine functionalities. Especially particles of 3 to 5 mm are suitable for large volume processes, where the LHSV can be as high as 10 h-1. No pressure drop issues are expected. Moreover, solid inorganic support based materials can be operated at higher temperatures and pressures, are hardly compressible and not solvent-sensitive compared to resin-based amines.

The CS₂-scavengers employed according to the present invention allow for higher space velocities when compared with WO 2018/029661 A1, since the particle size can be freely adjusted to achieve the desired higher space velocity. Typical ion exchange resins as employed according to WO 2018/029661 A1 rely on polymer beads which typically have diameters in the range of from 0.3 to 0.5 mm. A functionalization leads to the swelling of the particles so that final particles will typically have a diameter in the range of from 0.3 to 1.2 mm. This limited particle size leads to a high pressure drop in the practical application. Small space velocities of 0.1 to 1 l/l h and long contact times of 1 to 10 hours result.

The CS₂-scavengers employed according to the present invention show thermal stability, solvent stability, mechanical stability so that a stacking of the adsorbent in a fixed bed is possible. Furthermore, they experience no swelling and can be easily regenerated. They can be operated under high feedstock pressures with pressures of 10 bar or higher.

The solid reactive CS₂-scavenger employed according to the present invention is made by immobilizing amine functional groups on a solid support. The term "reactive CS₂-scavenger" describes that the amine functional groups undergo a chemical reaction with CS₂ leading to the formation of a carbamate group. Thus, the CS₂ is not adsorbed or absorbed by the CS₂-scavenger in a classical sense, but reacted therewith and consequently covalently bonded therewith.

The solid reactive CS₂-scavenger can be employed to treat fluid hydrocarbons which can also be described as hydrocarbon streams. The process can be carried out batchwise, for example in a stirred reactor, in which a slurry or fluidized solid reactive CS₂-scavenger is employed, or, preferably in a continuous manner by employing the solid reactive CS₂-scavenger as a fluidized or - most preferred - fixed bed.

The solid reactive CS₂-scavenger can be arranged in scrubbing zones having packed beds, ordered packings, monoliths and/or trays. It can for example be arranged in an absorption column building a scrubbing zone for a continuous process. A suitable apparatus is disclosed for example in US 8,529,857 B2.

The solid support can be in any desired shape, e.g. in the form of monoliths, like honeycomb structures or reactor internals (made by e.g. 3D printing or other additive manufacture), or in the form of granules, tablets, extrudates or molded materials. Preferably, the solid support is used in particulate form having an average particle size in the range of from 0.02 to 5.0 mm, more preferably 0.1 to 2.0 mm, most preferably 0.2 to 0.5 mm or in monolith form. Most preferred particles are spheres or granules having a particle size in the range of from 0.1 to 4 mm. For attaining higher space velocities, particle sizes in the range of from 2 to 5 mm or 3 to 5 mm can be preferable. The average particle size refers to the number or arithmetical average particle size as determined by optical measurements or sieving, employing sieves or a camsizer.

The solid adsorbent is preferably in particulate form, for example as beads or extruded rods. The adsorbents, before use thereof in the method according to the invention, can have been subjected to a usual shaping method such as, for example, pelletizing, tableting or extrusion. The solid adsorbent is preferably used in the form of a bed or as a fixed bed.

The solid support can be chosen from a variety of solid materials which preferably show minor or no attrition, when employed in the process according to the present invention. The support should furthermore be chemically inert with regard to alkylamines and constituents of hydrocarbon streams.

Preferably, the solid support is selected from silica, alumina, magnesia, titania, zirconia, or mixed oxides thereof or zeolites, aluminosilicates, spinels or carbon, wherein it is also possible to coat these supports with organic layers.

More preferably, the solid support is selected from silica gel, alumina or carbon.

Suitable solid adsorbents are specifically zeolites which are also termed molecular sieves, carbon-based adsorbents, silica gels or activated aluminum oxides.

Preferably, zeolites having a pore size of at least about 4.6 Å are used. Suitable zeolites are, for example, zeolite A (LTA), zeolite X or Y (FAU faujasite family) or zeolite MFI (ZSM-5 and silicalite). Specific examples are zeolite 5A, zeolite 13X, zeolite 4A or mixtures thereof.

Among the A zeolites (LTA), zeolite 4A is particularly suitable, the sodium ions of which are preferably partially replaced by calcium. The Na/Ca degree of exchange is preferably 25 to 85 mol %. Among the zeolites of type X or Y (faujasite FAU), zeolite 13X (NaX) is particularly suitable, wherein other cations, for instance Ca, Ba, Li, Sr, Mg, Rb, Cs, Cu, Ag, can be used for charge balancing. The Si/AI molar ratio can be from 1 to infinity (such as in dealuminized Y zeolites, for example). In these the ratio is infinite. Among the MFI zeolites, ZSM-5 are suitable having an Si/AI molar ratio from 1 to infinity (such as in silicalite, for example).

The carbon-based adsorbents include activated carbons, preferably those having a BET surface area (determined by physisorption of nitrogen at 77 K) from 200 to 2000 m²/g.

In addition, silica gels or activated aluminum oxides are suitable, preferably those having a BET surface area from 100 to 800 m²/g.

The solid reactive CS₂-scavenger contains primary and/or secondary amino group-bearing aliphatic hydrocarbon residues attached to the solid support. The residues are preferably attached to the solid support by covalent chemical bonding. Less preferred means for attaching the residues to the solid support are adsorbing them on the surface of the support by ionic, electrostatic or van der Waals forces.

The covalent bonding can be effected through spacer groups which are reactive towards the surface of the solid support. For example, the aliphatic hydrocarbon residue can be coupled with the solid support through an alkoxysilyl group, preferably trialkoxysilyl group like trimetoxysilyl group.

The spacer groups can be aliphatic, aromatic, araliphatic or alkaromatic groups. Typically, the spacer is an aliphatic hydrocarbon residue which can contain pendant or inserted aromatic groups, like phenyl or phenylene groups. Preferably, the aliphatic hydrocarbon residue contains linear, branched and/or cyclic aliphatic hydrocarbon groups. According to one embodiment of the invention, the spacer is a purely aliphatic hydrocarbon with the amino groups inserted or attached thereto.

The aliphatic hydrocarbon residues bear at least one primary and/or at least one secondary amino group, preferably at least two amino groups. More preferably, they bear at least three amino groups, preferably at least one primary and at least two secondary amino groups. Most preferably, the aliphatic hydrocarbon residue has one primary amino group at the end of and at least two secondary amino groups inserted in a linear C₃₋₁₂-alkylene residue, specifically C₅₋₉-alkylene residue, for example C₇-alkylene residue.

Preferably, the solid reactive CS₂-scavenger is formed by reacting a solid support, selected from silica, alumina and alumina, magnesia, titania, zirconia or mixed oxides thereof or zeolites, aluminosilicates, spinels or carbon with N¹-(3-trialkyloxysilylalkyl)dialkylenetriamine, like N¹-(3-trimethoxysilylpropyl)diethylenetriamine.

The amount of amino groups can be freely chosen. Preferably, the solid reactive CS₂-scavenger contains 0.1 to 60 mmol, more preferably 0.2 to 30 mmol, most preferably 0.5 to 7.5 mmol primary and secondary groups/g of the solid reactive CS₂-scavenger including the aliphatic hydrocarbon residues.

The amount of primary amino groups is more preferably 0.1 to 20 mmol, even more preferably 0.2 to 10 mmol/g.

When two secondary amino groups are present per NH₂ group, their amount is therefore twice the amount of the above NH₂ group content.

The support on which the amine functional groups are grafted is preferably silica, alumina, or carbon. It can be a powder or it can be formed particles like e.g. spheres, for use in a fixed bed. The functional groups are attached to the support, preferably by using silane coupling agents. These products contain usually three hydrolysable alkoxy groups and one organic substituent containing the primary amine functional group. In most cases, the CS₂-scavenger is made by contacting the coupling agent with the support in water. Water is not the only solvent, since methanol or toluene is also possible. The scavenger is then cured for example at 90°C, after which the CS₂-scavenger is filtered and dried. In this way, the surface of the support is covered with amine functional groups which are able to react with CS₂ to form dithiocarbamates.

The products to be used in the process of the invention are for example described in the review in the Journal of Environmental Chemical Engineering 6 (2018), 3192-3203, where 3 preferred amine precursors are mentioned several times. Preferred are the amine precursors aminopropyltrimethoxysilane, N-[3(trimethoxysilyl)propyl]ethylenediamine and N¹-(3-(trimethoxysilyl)-propyl)diethylenetriamine for the synthesis of the scavenger. In Part 2, Chapter 8 of "Characterization and chemical modification of the Silica Surface" by E. F. Vansant, P. Van Der Voort and K. C. Vrancken, Vol. 93, Elsevier Science, there is general information about grafting of silica surfaces with functional groups, including amino silanes.

The solid CS₂-scavenger as described above is employed for removing CS₂ from hydrocarbon streams. Typically, the hydrocarbon stream is a feedstock for steamcrackers, like naphtha or naphtha condensate or a hydrocarbon stream coming from the steamcracker or subsequent extraction and/or distillation unit.

Naphtha is a so-called low boiler which is obtained upon mineral oil or crude naphtha distillation immediately after removing gases at ambient pressure. It can be straight-run or virgin naphtha which is composed mainly of saturated aliphatic hydrocarbons and contains low amounts of aromatics, sulfur and nitrogen. Like naphtha, straight-run gasoline (SRG), light virgin naphtha (LVN) contains mainly C₅/C₆-hydrocarbons having a boiling point typically in the range of from 30 to 130°C. Heavy naphtha, straight-run benzene (SRB), heavy virgin naphtha (HVN) contains a major part of C₆₋₁₂-hydrocarbons having a boiling point from 130 to 220°C.

There are different forms of naphtha or naphtha like streams. There can be straight-run naphtha, hydrotreated naphtha, light naphtha, (delayed) coker naphtha, FCC naphtha, condensates from certain gas fields (these gas fields typically come with Hg). For further information on this, reference is made to Ullmann's Encyclopedia of Industrial Chemistry, chapter on Ethylene, Section 4 Raw Materials, (vol. 13) 2012, Wiley-VCH, Weinheim. The CS₂ problem in hydrocarbon streams is most pronounced when using coker naphtha. Straight-run naphtha or hydrotreated naphtha have this problem to a lower extent.
- Naphtha: 1^{st} petroleum fraction from distillation process;
- Light naphtha: IBP of about 30°C (86°F) and FBP of about 145°C (293°F), contains most of C₆ hydrocarbons;
- Heavy naphtha: IBP of about 140°C (284°F) and FBP of about 205°C (401 °F), contains most of the hydrocarbons with more than 6 carbon atoms;
- Heavy naphtha is the feedstock for reformers;
- Full range naphtha: a hydrocarbon stream used as feedstock in streamcrackers with a boiling range of 30 to 200°C.

Furthermore, cracker naphtha, coker naphtha, non-straight-run naphtha, hydro-treated naphtha and light-distillate feedstock (LDF) can be mentioned as preferred possible hydrocarbons.

It is an advantage of the CS₂-scavengers of the current invention that they show remarkable selectivity towards other sulfur containing molecules like thiols, thiophenes or sulfides. CS₂ is selectively adsorbed on the scavenger whereas the other sulfur containing molecules do not adsorb on the CS₂-scavenger. This makes the CS₂-scavenger ideal for the selective adsorption of CS₂ from steam cracker naphtha without losing valuable S-capacity due to adsorption of sulfur components other than CS₂. Separation of sulfur components other than CS₂ is feasible using existing assets and hence they will not accumulate in the C5+ fraction.

Furthermore, hydrocarbon fractions, like isoprene, can be employed, as mentioned in WO 2015/026649 A1. Suitable hydrocarbon streams are disclosed in US 2,418,047, EP 0 053 571 A1, WO 2015/026649 A1, US 2013/0211171 A1 and US 8,529,857 B2.

Steamcracker exit streams can be for example C₁-, C₂-, C₃-, C₄-, C₅-, C₆-streams.

The hydrocarbon stream is contacted with the solid reactive CS₂-scavenger at a temperature in a range of from 10 to 100°C, preferably 20 to 80°C, most preferably 30 to 60°C. The pressure is typically from ambient (1 bar) to 10 bar, more preferably 1 to 3 bar. The liquid hourly space velocity (LHSV) can be in the range of from 1 to 20/h, more preferably 3 to 10/h, most preferably 4 to 8/h.

The hydrocarbon stream most preferably is naphtha or natural gas condensate or a mixture thereof which is fed to a steamcracker. The CS₂-scavenger can also be used for the CS₂ removal from pyrolysis gasoline (pygas) or isoprene feedstocks.

It is possible to regenerate and reuse the spent CS₂-scavenger.

The invention is further illustrated by the following examples.

### Examples

### Example 1

The CS₂-scavenger used in this example was made according to a modified literature procedure (J. Haz. Mat. 2007, 149, 650-656).

Silica gel (150.2 g; 0.2 to 0.5 mm silica gel (60 A) from Acros Organics) was mixed with 410 g demi-water in a 1 liter round bottom flask. Eight droplets of surfactant (Dreft from P&G Professional) were added. While swirling the flask, 54.6 gram (200 mmol) of N1-(3-trimethoxysilylpropyl)diethylenetriamine was dropwisely added. After addition, the flask was connected to a rotary evaporator and heated to 92°C for 2 hours while rotating the flask at 60 rpm (no vacuum). The flask was then cooled to room temperature, the water layer decanted and the product was washed 3 times with 200 ml demi-water. Finally, the product was filtered and dried in an oven overnight at 105°C.

Analysis: LOI(105): 0.9 wt%. CNS: 8.7 wt% carbon, 4.0 wt% nitrogen, < 0.05 wt% sulfur.

The thus prepared CS₂-scavenger was tested in a small scale fixed bed reactor. The CS₂-scavenger particles (2.00 ml = 1.19 g) were premixed with the same volume of inert material (SiC 0.5 mm granules) and loaded in the reactor (diameter = 10 mm; L = 50 mm). The bed was dried at 120°C for 2 hours in an argon flow (4 ml/min) and finally cooled to the operation temperature (30°C and 60°C).

A heptane feed containing 60 ppm CS₂ (= 50 ppm S) was passed over the bed at 0.2 ml/min (LHSV = 6) and 3 barg pressure. Samples from the reactor were taken and analyzed for CS₂ content by gas chromatography.

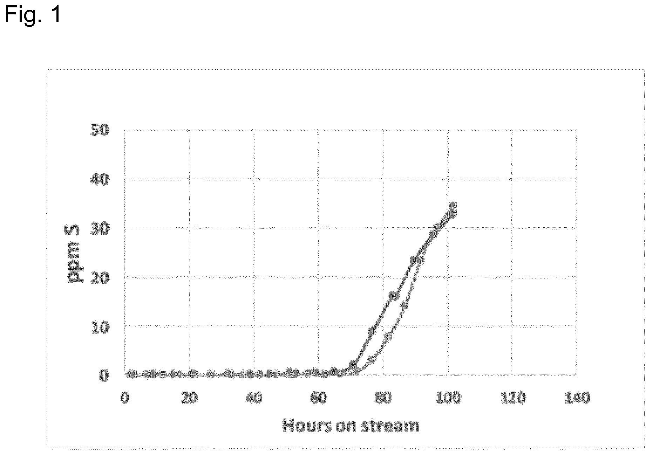

Fig. 1 shows the concentration of CS₂ in heptane at the outlet of the reactor at 30°C and 60°C in time (LHSV = 6 h-1 and 3 barg).

The upper curve was measured at 30°C, the lower at 60°C. The data depicted in Fig. 1 show that the CS₂ adsorbent performs surprisingly well.

After 102 hours on stream, the CS₂-scavenger was washed with heptane, dried and analyzed to determine the amount of carbon, nitrogen and sulfur (see Table 1).

**Table 1**

| | Spent analysis | | |
|---|---|---|---|
| | % C | % N | % S |
| 30°C | 8.6 | 3.6 | 2.3 |
| 60°C | 8.9 | 3.3 | 2.5 |

### Example 2

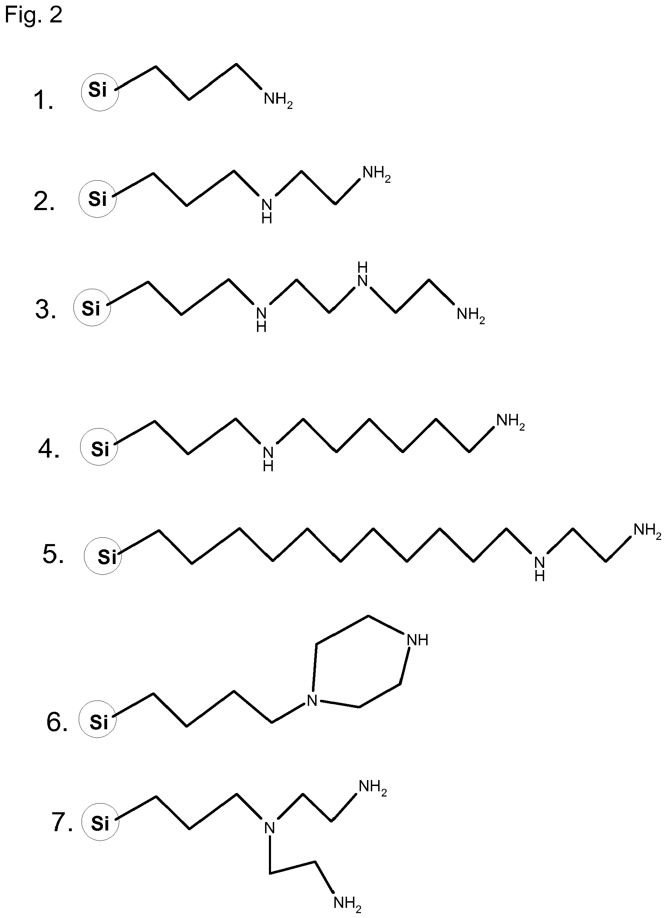

Other CS₂-scavengers (structures 1, 2, 4, 5 from Fig. 2) containing different amine functionalities were prepared using different amine precursors in a similar way as described in example 1. The thus prepared CS₂-scavengers were also tested in the removal of CS₂ from heptane. The preparation method and the CNS-analysis of the spent adsorbents are summarized in Table 2.

A material described in structures 6 and 7 in Fig. 2 can be envisaged to work as CS₂-scavengers similarly.

**Table 2**

| | | Preparation¹⁾ | | | CNS of spent adsorbent²⁾ | | |
|---|---|---|---|---|---|---|---|
| Run no. | Structure (see Fig. 2) | grafting Solvent | Temp °C | NH₂ groups mmol/g | Carbon % | Nitrogen % | Sulfur % |
| 1 | 1 | H₂O | 92 | 1,2 | 4,6 | 1,5 | 0,5 |
| 2 | 2 | H₂O | 92 | 1,15 | 6,7 | 2,5 | 1,3 |
| 3 | 3 | H₂O | 92 | 1,1 | 8,9 | 3,3 | 2,5 |
| 4 | 2 | Methanol | 35 | 1,19 | 6,3 | 2,5 | 2,2 |
| 5 | 2 | Toluene (dry) | 92 | 1,15 | 8,6 | 2,5 | 2,8 |
| 6 | 4 | H₂O | 92 | 1 | 11,3 | 2,6 | 2,9 |
| 7 | 5 | Toluene (dry) | 92 | 1,1 | 15,1 | 2,5 | 2,7 |

| | | | | | | | |
|---|---|---|---|---|---|---|---|
| ¹⁾ As described in Example 1; NH₂ groups by mass balance ²⁾ Test conditions: 2 cc; 30°C; 3 bar; LHSV = 6; 50 ppm S in heptane | | | | | | | |

### Example 3

In another test, the selectivity of the CS₂-scavenger (structure 2 in Fig. 2; 1.2 mmol -NH₂/g) towards other sulfur-containing molecules was investigated.

In four different 20 ml flasks, 200 mg of the CS₂-scavenger was mixed with 10 ml of heptane. To these flasks was subsequently added an 11-fold excess of CS₂, ethyl sulfide, thiophene and propanethiol. After filtering and air drying, the carbon, nitrogen and sulfur content of the spent CS₂-scavengers were analyzed (see Table 3.)

**Table 3**

| Sulphur | Spent analysis | | |
|---|---|---|---|
| | % C | % N | %S |
| CS₂ | 6.7 | 2.7 | 1.4 |
| Propanethiol | 6.7 | 2.7 | < 0.05 |
| Ethyl sulphide | 6.6 | 2.7 | < 0.05 |
| Thiophene | 6.6 | 2.7 | < 0.05 |

## Claims

1. A process for producing a hydrocarbon stream with reduced CS₂ content, comprising contacting a hydrocarbon stream containing CS₂ with a solid reactive CS₂-scavenger which contains primary and/or secondary amino group-bearing hydrocarbon residues attached to a solid inorganic support, at a temperature in the range of from 0 to 300°C, and separating the obtained reaction product of CS₂ and reactive CS₂-scavenger from the hydrocarbon stream.

2. The process according to claim 1, wherein the hydrocarbon stream is a naphtha containing stream, preferably steam cracker feed stream or a stream coming from a steam cracker or subsequent extraction and/or distillation unit.

3. The process according to claim 1 or 2, wherein the solid reactive CS₂-scavenger is employed in the form of a slurry, a fluidized bed or fixed bed.

4. The process according to one of claim 1 to 3, wherein the solid inorganic support is selected from silica, alumina, magnesia, titania, zirconia or mixed oxides thereof or zeolites, aluminosilicates, spinels or carbon, wherein these supports can be coated with organic layers, preferably from silica gel particles.

5. The process according to one of claims 1 to 4, wherein the hydrocarbon residues each bear at least one primary and/or at least one secondary amino group, preferably at least one terminal primary or secondary amino group.

6. The process according to claim 5, where in the case of multiple primary and/or secondary amine groups in the hydrocarbon residue, these amine groups are separated from each other by a linear C₂-C₁₁-alkylene residue.

7. The process according to claim 5, wherein one primary amino group at the end of and at least one secondary amino group inserted in a linear C₃₋₂₀-alkylene residue are attached to the solid support, and/or wherein at least one tertiary amino group and/or secondary amino group is inserted in a branched or cyclic C₅₋₂₀-alkylene residue being attached to the solid support.

8. The process according to one of claims 1 to 7, wherein the aliphatic hydrocarbon residues are coupled with the solid support through an alkoxysilyl group, preferably trialkoxysilyl group, or through a hydroxysilyl group.

9. The process according to one of claims 1 to 8, wherein the solid reactive CS₂-scavenger is formed by reacting a solid support, selected from silica, alumina, magnesia, titania, zirconia or mixed oxides thereof or zeolites, aluminosilicates, spinels or carbon with N¹-(3-alkoxysilylalkyl)dialkylenetriamine, preferably N¹-(3-trimethoxysilylpropyl)diethylenetriamine, and/or wherein the solid reactive CS₂-scavenger contains 0.1 to 60 mmol, preferably 0.2 to 30 mmol, more preferably 0.5 to 7.5 mmol primary and secondary amino groups/g.

10. The use of a solid CS₂-scavenger as defined in one of claims 1 to 9 for removing CS₂ from hydrocarbon streams.

11. A solid reactive CS₂-scavenger which contains primary and/or secondary amino group-bearing hydrocarbon residues attached to a solid inorganic support.

12. The scavenger according to claim 11, wherein the solid inorganic support is selected from silica, alumina, magnesia, titania, zirconia or mixed oxides thereof or zeolites, aluminosilicates, spinels or carbon, wherein these supports can be coated with organic layers, preferably from silica gel particles.

13. The scavenger according to claim 11 or 12, wherein the hydrocarbon residues each bear at least one primary and/or at least one secondary amino group, preferably at least one terminal primary or secondary amino group.

14. The scavenger according to one of claims 11 to 13, where in the case of multiple primary and/or secondary amine groups in the hydrocarbon residue, these amine groups are separated from each other by a linear C₂-C₁₁-alkylene residue or wherein one primary amino group at the end of and at least one secondary amino group inserted in a linear C₃₋₂₀-alkylene residue are attached to the solid support, and/or wherein at least one tertiary amino group and/or secondary amino group is inserted in a branched or cyclic C₅₋₂₀-alkylene residue being attached to the solid support.

15. The scavenger according to one of claims 11 to 14, wherein the aliphatic hydrocarbon residues are coupled with the solid support through an alkoxysilyl group, preferably trialkoxysilyl group, or through a hydroxysilyl group.
